## Europäisches Patentamt

## European Patent Office

## Office européen des brevets

(19)

(11) Veröffentlichungsnummer: **0 142 135**
**B1**

(12) # EUROPÄISCHE PATENTSCHRIFT

(45) Veröffentlichungstag der Patentschrift:
10.08.88

(51) Int. Cl.⁴: **G 01 M 17/04**

(21) Anmeldenummer: **84113493.5**

(22) Anmeldetag: **08.11.84**

(54) **Verfahren und Vorrichtung zum Qualifizieren von Stossdämpfern an mit elastischen Reifen versehenen, gefederten Fahrwerken, vorzugsweise Kraftfahrzeugen.**

(30) Priorität: **14.11.83 HU 388583**

(43) Veröffentlichungstag der Anmeldung:
**22.05.85 Patentblatt 85/21**

(45) Bekanntmachung des Hinweises auf die Patenterteilung:
**10.08.88 Patentblatt 88/32**

(84) Benannte Vertragsstaaten:
**AT BE CH DE FR GB IT LI LU NL SE**

(56) Entgegenhaltungen:
**EP-A-0 049 303**
**US-A-4 002 051**

**SOVIET INVENTIONS ILLUSTRATED, DERWENT, Woche B 47, 9. Januar 1980, London, GB; & SU - A - 651 227 (A.V. SHUVATOV) 15-03-1977**

(73) Patentinhaber: **"TRANSINNOV" Közlekedési Müszaki Fejlesztö Leányvállalat, Thán Károly u. 3-5, Budapest XI (HU)**

(72) Erfinder: **Tamasi, Attila, Gulyás u. 16, Budapest XI (HU)**
Erfinder: **Kardos, Mihály, Hosszu u. 25, Budapest XX (HU)**
Erfinder: **Farago, László, Bója u. 24, Budapest XVIII (HU)**

(74) Vertreter: **Ebbinghaus, Dieter, v. FÜNER, EBBINGHAUS, FINCK Patentanwälte European Patent Attorneys Mariahilfplatz 2 & 3, D-8000 München 90 (DE)**

## Beschreibung

Die Erfindung betrifft ein Verfahren sowie eine Vorrichtung zum Qualifizieren von Stoßdämpfern an mit elastischen Gummireifen versehenen Fahrwerken, vorzugsweise an Fahrwerken von Straßen-Kraftfahrzeugen - Ansprüche 1 und 3.

Zur Annäherung an die wirklichen Straßenverhältnisse und um die Qualifizierung universal zu gestalten, wird in der ungarischen Patentschrift Nr. 176 823 (EP-A1-49303) eine Lösung beschrieben, bei welcher in den Beschleunigungs- und Verzögerungsperioden der Erregerfrequenz die Änderungen der Radsohlenkraft gefühlt, aus diesen elektronisch der Rad-Sohlenkraftmittelwert errechnet, danach während der Verzögerungsphase die bei der Eigenfrequenz des Fahrwerks auftretende minimale Rad-Sohlenkraft mit dem Rad-Sohlenkraftmittelwert in Relation gebracht, und hieraus die Güte des Stoßdämpfers qualifiziert wird. Hierzu wird eine Vorrichtung verwendet, die eine Radstütze und eine mit dieser zusammenarbeitende Erregereinheit besitzt, wobei die Radstütze und die Erregereinheit über einen zweiarmigen Hebel miteinander verbunden sind und ihr Drehpunkt mit einem Kraftfühler kombiniert ist. Der Kraftfühler steht mit einer elektronischen Meßeinheit in Verbindung.

Bei der obigen Lösung wird der Quotient aus der bei der Eigenfrequenz des Fahrwerks auftretenden minimalen Rad-Sohlenkraft und deren Mittelwert gebildet, und die Qualifikation des Stoßdämpfers in Prozenten ausgedrückt. Bei dieser Methode bleibt aber ein beträchtlicher Teil des Qualifizierungsbereichs unausgenüzt. Die Erregeramplitude und die Gummisteifigkeit löst mämlich immer eine Kraftschwankung gewissen Ausmaßes aus, so daß sich auch bei dem prinzipiell erreichbaren oberen Grenzwert (100 %) (mithin bei übermäßiger Schwingungsdämpfung) mit dieser Lösung nur eine Qualifikation von 75-80 % ergibt.

Das Ziel der Erfindung ist die Weiterentwicklung der obigen Lösung, d.h. die Schaffung eines Verfahrens und einer Vorrichtung, bei deren Anwendung der ganze Qualifikationsbereich, einschließlich des prinzipiell erreichbaren oberen Grenzwertes, ausgenüzt werden kann. Zur Lösung der gestellten Aufgabe wird das aus dem ungarischen Patent Nr. 176 823 (EP-A1-49303) bekannte Verfahren erfindungsgemäß dadurch weitergebildet, daß die minimale Sohlenkraft angenähert am Maximalfrequenzpunkt gemessen wird, ferner aus der bei Eigenfrequenz des Fahrwerks gemessenen Minimalsohlenkraft und aus der bei Maximalfrequenz gemessenen Minimalsohlenkraft eine Verhältniszahl gebildet, und nach dem jeweils erhaltenen Wert die Stoßdämpfung des Fahrwerks qualifiziert wird.

Zweckmäßig ist als Maximalfrequenz mindestens das Anderthalbfache der Eigenfrequenz des Fahrwerks zu wählen.

Das Verfahren gemäß der Erfindung kann mit einer Vorrichtung durchgeführt werden, die eine Radstütze, eine mit dieser über eine Übertragungskonstruktion zusammenarbeitende Erregereinheit, und eine mit einem Kraftfühler verbundene elektronische Meßeinheit aufweist, die mit einer Übertragungsvorrichtung in Verbindung steht. Das Wesen der erfindungsgemäßen Vorrichtung besteht darin, daß die Erregereinheit Hebekeile besitzt, die mit einem Drehmechanismus fortbewegt werden können, und die einesteils an den in der unteren Ebene der Radstütze ausgestalteten oberen Arbeitsflächen, andereteils an den Arbeitsflächen der als Zweistützenbalken ausgestalteten Übertragungskonstruktion gebettet sind, wobei die oberen und/oder die unteren Arbeitsflächen mit der Horizontalen einen spitzen Winkel $\alpha$ einschließen, und eine der den Zweistützenbalken tragenden Stützen die Kraftfühleinheit selbst ist.

Die Erfindung wird anhand eines in der Zeichnung dargestellten Ausführungsbeispiels näher erläutert. Es zeigen:

Fig. 1      im Diagramm die Änderungen des Rad-Sohlendruckes,

Fig. 2      den Vertikalschnitt einer erfindungsgemäßen Vorrichtung und

Fig. 3      das elektrische Schaltbild der elektronischen Meß- und Kraftfühleinheit der Vorrichtung nach Fig. 2.

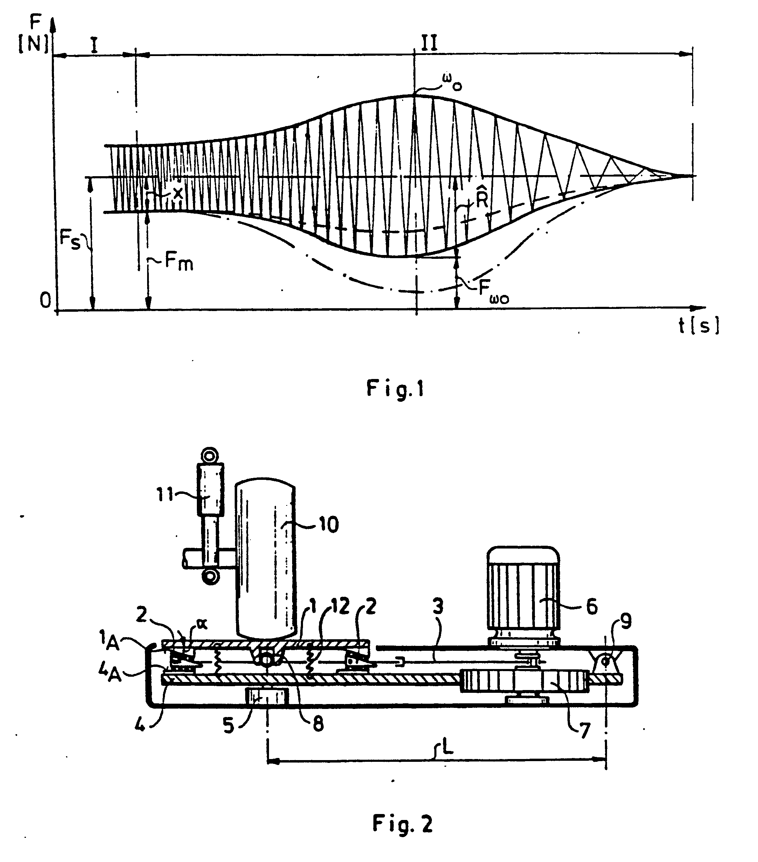

Im Rad-Sohlenkraftdiagramm nach Fig. 1 sind auf der Vertikalachse Sohlenkräfte F, auf der Horizontalachse die Zeitwerte t aufgetragen. Die Beschleunigungsphase ist mit I, die Verzögerungsphase mit II, die Eigenfrequenz des Fahrwerkes mit $\omega_0$, die hierzu gehörige minimale Rad-Sohlenkraft mit $F_{\omega_0}$, die zur Maximalfrequenz gehörige Miminalsohlenkraft mit $F_m$, der Sohlenkraftmittelwert mit $F_s$ bezeichnet. Die starke durchgehende Linie bedeutet die mittlere Stoßdämpfung, die dünne gestrichelte Linie die "starke" Stoßdämpfung und die dünne strichpunktierte Linie die "schwache" Stoßdämpfung. Der zur Maximalfrequenz gehörende minimale Sohlenkraftwert wurde mit einer dünnen kontinuierlichen Linie bis zur Eigenfrequenz des Fahrwerks verlängert. Dies würde die theoretisch erreichbare maximale Stoßdämpfung, d.h. Qualifikation der Güte gleich 100 %, bedeuten.

Bei Versuchen wurde die Maximalfrequenz mit Werten zwischen 15-24 Hz, die Beschleunigungszeit I mit 2 s und die Verzögerungszeit II mit 20 s gewählt, d.h. etwas größer als das 1,5-fache der Eigenfrequenz des geprüften Fahrwerks. (Bemerkt sei, daß die Eigenfrequenz der Fahrwerke an Personenkraftwagen Werte zwischen 12-15 Hz und an Lastkraftwagen Werte um 10 Hz hat).

Erfindungsgemäß wird bei Maximalfrequenz die Minimalsohlenkraft $F_m$ gemessen. Diese wird dann zu der bei Eigenfrequenz des Fahrwerks gemessenen Minimalsohlenkraft $F_{\omega_0}$ in Relation gesetzt. Daraus wird eine Verhältniszahl "k" wie

folgt gebildet:

$$k = F_{\omega o}/F_m \cdot 100\,\%$$

Je nach dem erhaltenen Wert wird der Stoßdämpfer des Fahrwerks (in Prozent) qualifiziert.

Betont sei, daß hierdurch die volle Stoßdämpfung des ganzen Fahrwerks, und nicht allein die Güte des Stoßdämpfers qualifiziert wird. In der Stoßdämpfung des Fahrwerks spielt nämlich außer dem Stoßdämpfer auch die Eigendämpfung des Reifens und der Federung, sowie auch die reibungsartige Dämpfung der Aufhängelemente eine Rolle. Hier sei bemerkt, daß z. B. die Reibung zwischen den einzelnen Blättern eines Bandfederbündels gegebenenfalls den Dämpfungswert verbessern kann.

In Fig. 2 ist im Schnitt ein Ausführungsbeispiel der erfindungsgemäßen Vorrichtung ohne die elektronische Meß- und Auswertungseinheit und die Anzeigeeinheit gezeigt. Die Vorrichtung enthält eine Radstütze 1 und eine mit dieser über eine Übertragungskonstruktion zusammenwirkende Erregereinheit. Die Erregereinheit besteht aus einem Drehmechanismus 3, aus dem diesen antreibenden Elektromotor 6 und einem an der Drehwelle des Drehmechanismus 3 befestigten Schwungrad 7. Der Drehmechanismus 3 steht mit in der horizontalen Ebene verschiebbaren Hebekeilen 2 in Verbindung, welche auf ihrer Oberseite mit an der Unterseite der Radstütze 1 angeordneten Arbeitsflächen $1_A$ und auf ihrer Unterseite auf Arbeitsflächen $4_A$ an der als Zweistützenbalken 4 ausgestalteten Übertragungskonstruktion gelagert sind.

Die Arbeitsflächen $1_A$ der Radstütze 1 schließen mit der Horizontalen einen spitzen Winkel $\alpha$ ein; ferner sind die Hebelkeile 2 an ihren oberen und unteren Auflageflächen mit Nadelrollen versehen. Die eine Stütze des Zweistützenbalkens 4 bildet eine als elektrischer Signalsender ausgestaltete Kraftfühleinheit 5, welche dank einer später zu erörternden elektronischen Meß- und Auswerteinheit die Möglichkeit zu praktisch verschiebungsfreien Kraftmessungen bietet.

Das Schwungrad 7 der Erregereinheit hat die Aufgabe, eine allmähliche Frequenzverminderung zu sichern.

Die Lagerung der Hebekeile 2 auf den Nadelrollen schafft einen vernachlässigbar kleinen Reibungswiderstand. Die Radstütze 1 ist weiter mit einer sie vertikal führenden Einheit 8 versehen. Die andere Stütze des Zweistützbalkens 4 bildet im vorliegenden Falle ein Aufhänggelenk 9, um welche der Balken, beispielsweise zur Montage, aufkippbar ist. Die Radstütze 1 ist mit dem Zweistützbalken 4 über Zugfedern 12 verbunden. Das Rad des Kraftwagens ist mit 10 und sein Stoßdämpfer mit 11 bezeichnet.

Im vorliegenden Falle wurde ein Abstand L der Mittellinie zwischen dem Gelenk 9 und der Kraftfühleinheit 5 zu 80 cm gewählt. Diesem relativ großen Abstand und dem Aufhänggelenk 9 ist es zu verdanken, daß der Einfluß der horizontal gerichteten Kräfte völlig beseitigt werden kann.

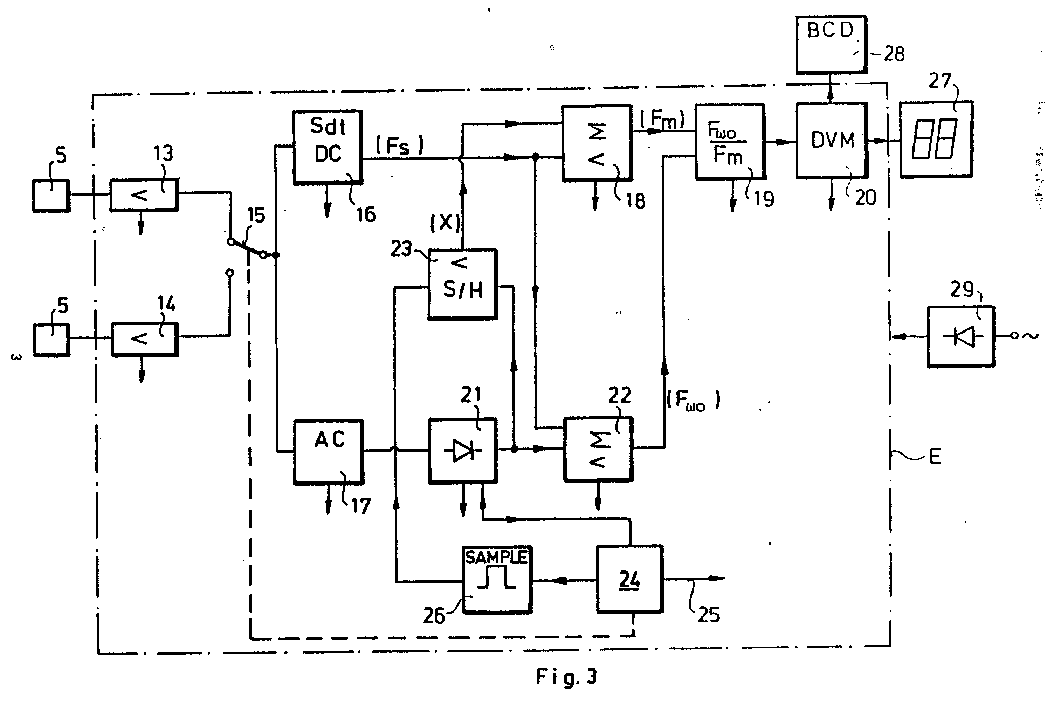

In Fig. 3 ist das elektrische Schaltbild einer elektronischen Meß- und Auswerteinheit der erfindungsgemäßen Vorrichtung gezeigt, die als Ganzes mit E bezeichnet ist. Im dargestellten Falle wurden getrennt zwei Kraftfühleinheiten 5 (für linksseitiges und rechtsseitiges Fahrzeugrad) eingezeichnet, welche an einen Vorverstärker 13 bzw. 14 angeschlossen sind. Die Ausgangsleitungen der Vorverstärker 13 und 14 sind an einem Umschalter 15 angeschlossen. Die Vorverstärker 13 und 14 verstärken die verhältnismäßig niedrige Ausgangsspannung der Kraftfühleinheiten 5 von 2 mV auf 0,5 V. An den Umschalter 15 sind parallel zueinander ein DC-Verstärker-Integrator 16 und ein AC-Verstärker 17 angeschlossen. Mit dem DC-Verstärker-Integrator 16 ist ein Summierverstärker 18, ein Quotientbildner 19 und ein Digitalvoltmeter 20 in Reihe geschaltet. Mit dem AG-Verstärker 17 sind ein Spitzengleichrichter 21 und ein Summier-Verstärker 22 in Reihe geschaltet. Der Ausgang des Spitzengleichrichters 21 steht ferner mit einem SAMPLE/HOLD-Verstärker 23 in Verbindung, dessen Ausgang an den anderen Eingang des Summierverstärkers 18 angeschlossen ist. Der zweite Eingang des Spitzengleichrichters 21 ist mit einer Einheit 24 zum Löschen, Steuern und zur Seitenwahl verbunden. Einer seiner Ausgänge ist an einen mit einem Pfeil 25 bezeichneten Motorschalter, der andere Ausgang an einen SAMPLE-Impulsgenerator 26 angeschlossen. Der Ausgang des SAMPLE-Impulsgenerator 26 ist an einen weiteren Eingang des SAMPLE/HOLD-Verstärkers 23 gelegt. Der Ausgang des Summierverstärkers 22 ist mit dem anderen Eingang des Quotientbildners 19 und sein anderer Eingang mit dem Ausgang des DC-Verstärker-Integrator 16 verbunden. Die Ausgänge des Digitalvoltmeters 20 stehen mit einem Digitalanzeiger 27 bzw. zum Steuern des Zeilendruckers mit einer BCD-Anpaßeinheit 28 in Verbindung. Die beiden letzteren Einheiten gehörenstreng genommen - nicht mehr zur elektronischen Meß- und Auswerteinheit E.

Ebensowenig ist auch eine Speiseeinheit 29 Teil der elektronischen Meß-und Auswerteinheit E. Sie ist mit den durch einen abwärts gerichteten Pfeil versehenen Einheiten der elektronischen Meß- und Auswerteinheit E verbunden.

Der DC-Verstärker-Integrator 16 dient zur Verstärkung 1 : 10 und zur Mittelwertbildung.

Der AC-Verstärker 17 verstärkt gleichfalls im Verhältnis 1 : 10 die wechselnden Signale für den Spitzengleichrichter 21. Der Spitzengleichrichter 21 mißt die Spitzenwerte der wechselnden Signale und speichert sie zugleich. Der Summierverstärker 18 substrahiert aus dem Signal $F_s$ des DC-Verstärker-Integrators 16 das gespeicherte x-Signal des SAMPLE/HOLD-Verstärkers 23 und bildet hieraus den Wert $F_m$ (Fig. 1).

Die Aufgabe des SAMPLE-Impulsgenerators 26 besteht darin, daß er im vorliegenden Falle nach dem Ausschalten des Elektromotors 6 (Fig. 2) einen Impuls (auf TTL-Niveau) von 0,5 s Länge hervorruft.

Von dem SAMPLE/HOLD-Verstärker 23 wird in der Impulszeit des SAMPLE-Impulsgenerators 26 aus dem Ausgangssignal des Spitzengleichrichters 21 eine Probe entnommen und diese für die Dauer der Messung gespeichert.

Der Quotientbildner 19 verrichtet die Division $F_{\omega o}/F_m$ und gibt das Ergebnis an das Digitalvoltmeter 20 weiter.

Von dem Digitalvoltmeter 20 wird das Analogsignal der Division in ein Digitalsignal umgewandelt und die Anzeige gesteuert. (Während der Messung 00; hiernach 20 sec. später der Wert der Stoßdämpfung, z. B. 62 %).

Der Digitalanzeiger 27 sowie die den Zeilendrucker steuernde BCD-Anpaßeinheit 28, ferner auch die Speiseeinheit 29, welche die stabilisierte Speisespannung der Stromkreise liefert, sind an sich bekannt.

Die Aufgabe der Einheit 24 zum automatischen Löschen, Steuern und Seitenwählen besteht darin, daß sie die zeitlich verschobenen Messungen steuert, die Zeitverzögerung sichert, den S/H-Impuls anläßt und bei der Seitenwahl den Umschalter 15 mit der rechtsseitigen bzw. linksseitigen Kraftfühleinheit 5 in Kontakt bringt.

Der wichtigste Vorteil der Erfindung besteht darin, daß sie die Möglichkeit zur Ausnützung des ganzen Qualifizierungsbereichs bietet, d.h. die theoretisch maximal erreichbare Stoßdämpfung auf 100 % zu werten vermag. Darüberhinaus kann die Vorrichtung auch bei einem heterogenen Fahrzeugpark universal angewendet werden, und ist in ihrem Aufbau sehr einfach, billig und betriebssicher.

**Patentansprüche**

1. Verfahren zum Qualifizieren der Stoßdämpfung von mit elastischen Gummireifen versehenen, gefederten Fahrwerken, vorzugsweise von Kraftfahrzeugen, bei welchem das Rad des Fahrwerks durch Erregung mit Sinusschwingungen von konstanter Amplitude mit einer die Eigenfrequenz des zu prüfenden Fahrwerks überschreitenden Frequenz beschleunigt, dann durch allmähliches Senken der Frequenz verlangsamt wird, wobei die Erregerfrequenz auch die Eigenfrequenz des Fahrwerks durchläuft, dabei die Änderungen der Radsohlenkraft erfaßt und während der Verzögerung die beim Eigenfrequenz Minimalwert des Fahrwerks auftretende minimale Sohlenkraft ($F_{\omega o}$) gemessen wird, dadurch gekennzeichnet, daß die minimale Sohlenkraft ($F_m$) angenähert bei der maximalen Frequenz gemessen, sowie aus der bei der Fahrwerk-Eigenfrequenz ($\omega_o$) gemessenen minimalen Sohlenkraft ($F_{\omega o}$) und der bei Maximalfrequenz gemessenen minimalen Sohlenkraft ($F_m$) eine Verhältniszahl (k) gebildet wird (k = $F_{\omega o}/F \cdot 100$ %), und nach dem jeweils erhaltenen Wert die Stoßdämpfung des Fahrwerks qualifiziert wird.

2. Verfahren nach Anspruch 1, dadurch gekennzeichnet, daß als Maximalfrequenz mindestens das Anderthalbfache der Eigenfrequenz ($\omega_o$) des Fahrwerks gewählt wird.

3. Vorrichtung zur Durchführung des Verfahrens nach Anspruch 1 und 2, mit einer Radstütze (1), einer über eine Übertragungskonstruktion mit dieser zusammenarbeitenden Erregereinheit und einem mit einer elektronischen Meßeinheit verbundenen und mit einer Übertragungsvorrichtung in Verbindung stehenden Kraftfühler (5), dadurch gekennzeichnet, daß die Erregereinheit durch einen Drehmechanismus (3) horizontal verschiebbare Hebekeile (2) aufweist, die einerseits an der unteren Ebene der Radstütze (1) an dort vorgesehenen Arbeitsflächen ($1_A$) und andererseits an Arbeitsflächen ($4_A$) der als Zweistützenbalken (4) ausgestalteten Übertragungskonstruktion anliegen, wobei die oberen und/oder die unteren Arbeitsflächen ($1_A$ bzw. $4_A$) mit der Horizontalen einen spitzen Winkel ($\alpha$) einschließen, und daß eine Stütze des Zweistützenbalkens (4) den Kraftfühler (5) bildet.

4. Vorrichtung nach Anspruch 3, dadurch gekennzeichnet, daß die Hebekeile (2) auf Nadelrollen gelagert sind.

5. Vorrichtung nach Anspruch 3 oder 4, dadurch gekennzeichnet, daß die andere Stütze des Zweistützenbalken (4) als Aufhänggelenk (9) ausgestaltet ist, um welches der Zweistützenbalken (4) hochkippbar ist.

6. Vorrichtung nach einem der Ansprüche 3 bis 5, dadurch gekennzeichnet, daß die elektronische Meßeinheit als Meß- und Auswertungseinheit (E) ausgestaltet ist, welche einen an den Kraftfühler (5) angeschlossenen Vorverstärker (13 bzw. 14) enthält, an deren Ausgänge parallel zueinander ein DC-Verstärker-Integrator (16) und ein AC-Verstärker (17) angeschlossen sind, wobei mit dem DC-Verstärker-Integrator (16) ein Summierverstärker (18), ein Quotientbildner (19) und ein Digitalvoltmeter und mit dem AC-Verstärker (17) ein Spitzengleichrichter (21) und ein Summierverstärker (22) in Reihe geschaltet sind, ferner der Ausgang des Spitzengleichrichters (21) mit einem SAMPLE/HOLD-Verstärker (23) in Verbindung steht, dessen Ausgang an den zweiten Eingang des Summierverstärkers (18) angeschlossen ist, der Ausgang des Spitzengleichrichters (21) weiter mit dem SAMPLE/HOLD-Verstärker (23) in Verbindung steht, dessen Ausgang an den zweiten Eingang des Summierverstärkers (18) angeschlossen ist, während der andere Ein- bzw. Ausgang des Spitzengleichrichters (21) mit einer Einheit (24) zum automatischen Löschen, Steuern und Seitenwählen verbunden ist, deren einer Ausgang an einen Motorschalter und deren anderer Ausgang an einen SAMPLE-Impulsgenerator (26) angeschlossen ist, dessen Ausgang an einen weiteren Eingang des SAMPLE/HOLD-Verstärkers (23) gelegt ist, während der Ausgang des Summierverstärkers (22) an den anderen Eingang des Quotientbildners (19 ), der andere Eingang an den Ausgang des DC-Verstärker-Integrators (16) anschließt, und ein Ausgang des Digitalvoltmeters (20) an einen Digitalanzeiger (27) und/oder an eine BCD-Anpaßeinheit (28) angeschlossen ist.

## Claims

1. A process for qualifying the shock absorption of spring-suspended vehicles provided with elastic rubber tyres, preferably of motor vehicles, in which the wheel of the vehicle is accelerated by excitation with sinusoidal oscillations of constant amplitude at a frequency exceeding the natural frequency of the vehicle to be tested, then is retarded by gradual reduction of the frequency, the excitation frequency also passing through the natural frequency of the vehicle, in which process the changes in wheel tread force are detected and the minimum tread force ($F_{\omega o}$) occurring at the minimum natural frequency value of the vehicle during the retardation is measured, characterized in that the minimum tread force ($F_m$) approximated at the maximum frequency is measured and a ratio (k) formed from the minimum tread force ($F_{\omega o}$) measured at the vehicle natural frequency ($\omega_o$) and the minimum tread force ($F_m$) measured at maximum frequency (k = $F_{\omega o}/F_m$ x 100 %), and the shock absorption of the vehicle is qualified according to the particular value obtained.

2. A process according to Claim 1, characterized in that at least one and a half times the natural frequency ($\omega_o$) of the vehicle is chosen as maximum frequency.

3. A device for implementation of the process according to Claims 1 and 2, having a wheel support (1), an excitation unit, interacting with the latter via a transmission construction, and a force sensor (5), connected to an electronic measuring unit and in connection with a transmission device, characterized in that the excitation unit has lifting wedges (2) which can be displaced horizontally by a rotary mechanism (3) and bear on the one hand against the lower face of the wheel support (1) at working surfaces ($1_A$) provided there and on the other hand at working surfaces ($4_A$) of the transmission construction designed as a two-member beam (4), the upper and/or the lower working surfaces ($1_A$ and $4_A$, respectively) forming an acute angle ($\alpha$) with the horizontal, and in that one member of the two-member beam (4) forms the force sensor (5).

4. A device according to Claim 3, characterized in that the lifting wedges (2) are mounted on needle rollers.

5. A device according to Claim 3 or 4, characterized in that the other member of the two-member beam (4) is designed as a suspension link (9), about which the two-member beam (4) can be tilted up.

6. A device according to one of Claims 3 to 5, characterized in that the electronic measuring unit is designed as a measuring and evaluation unit (E), which includes a preamplifier (13 and 14, respectively) connected to the force sensor (5), to the outputs of which preamplifier a DC amplifier-integrator (16) and an AC amplifier (17) are connected in parallel with each other, a summing amplifier (18), a quotient former (19) and a digital voltmeter being connected in series with the DC amplifier-integrator (16) and a peak-responding rectifier (21) and a summing amplifier (22) being connected in series with the AC amplifier (17), the output of the peak-responding rectifier (21) being, furthermore, in connection with a SAMPLE/HOLD amplifier (23), the output of which is connected to the second input of the summing amplifier (18), the output of the peak-responding rectifier (21) also being in connection with the SAMPLE/HOLD amplifier (23), the output of which is connected to the second input of the summing amplifier (18), while the other input or output of the peak-responding rectifier (21) is connected to a unit (24) for automatic erasure, control and page selection, the one output of which is connected to an engine switch and the other output of which is connected to a SAMPLE pulse generator (26), the output of which is taken to a further input of the SAMPLE/HOLD amplifier (23), while the output of the summing amplifier (22) is connected to the other input of the quotient former (19), the other input is connected to the output of the DC amplifier-integrator (16) and one output of the digital voltmeter (20) is connected to a digital indicator (27) and/or to a BCD interface unit (28).

## Revendications

1. Procédé pour établir la qualification de l'amortissement de dispositifs roulants, de préférence de véhicules automobiles, à suspension et équipés de pneumatiques élastiques en caoutchouc, selon lequel on accélère la roue du dispositif roulant par excitation à l'aide d'oscillations sinusoïdales d'amplitude constante, à fréquence excédant la fréquence propre du dispositif roulant à vérifier, puis on ralentit cette roue en abaissant progressivement la fréquence, cette fréquence d'excitation passant aussi par la fréquence propre du dispositif roulant, on détecte à cette occasion les variations de l'effort appliqué sur la base de la roue et, pendant le ralentissement, on mesure l'effort ($F_{\omega o}$) minimal sur la base qui se présente pour la valeur minimale de fréquence propre du dispositif roulant, caractérisé en ce qu'on mesure l'effort ($F_m$) minimal sur la base approximativement pour la fréquence maximale et, à partir de l'effort ($F_{\omega o}$) minimal sur la base mesuré pour la fréquence propre ($\omega_o$) du dispositif roulant et de l'effort ($F_m$) minimal sur la base mesuré pour la fréquence maximale, on forme un coefficient de proportionnalité (k = $F_{\omega o}/F_m \cdot$ 100 %) et, suivant la valeur à chaque fois obtenue, on détermine la qualification de l'amortissement du dispositif roulant.

2. Procédé selon la revendication 1, caractérisé en ce que, comme fréquence maximale, on choisit au moins une fois et demi la fréquence propre ($\omega_o$) du dispositif roulant.

3. Dispositif de mise en oeuvre du procédé selon les revendications 1 et 2, comportant un appui de roue (1), une unité d'excitation coopérant avec celui-ci par l'intermédiaire d'une structure de transmission et un capteur d'efforts (5) relié à une unité électronique de mesure et en liaison avec un dispositif de transmission, caractérisé en ce que l'unité d'excitation comprend des coins de soulèvement (2 ) déplaçables en translation horizontale par un mécanisme rotatif (3) et qui s'appuient, d'une part, sur le plan inférieur de l'appui de roue (1), sur des surfaces actives ($1_A$) prévues à cet endroit, et, d'autre part, sur des surfaces actives ($4_A$) de la structure de transmission qui est réalisée sous la forme d'une poutre à deux appuis (4), les surfaces actives supérieures et/ou inférieures ($1_A$ ou $4_A$) faisant un angle aigu ($\alpha$) avec l'horizontale, et en ce que l'un des appuis de la poutre à deux appuis (4) constitue le capteur d'efforts (5).

4. Dispositif suivant la revendication 3, caractérisé en ce que les coins de soulèvement (2) sont montés sur des roulements à aiguilles.

5. Dispositif suivant la revendication 3 ou 4, caractérisé en ce que l'autre appui de la poutre à deux appuis (4) est réalisé sous la forme d'une articulation de suspension (9) autour de laquelle cette poutre à deux appuis (4) peut basculer vers le haut.

6. Dispositif suivant l'une des revendications 3 à 5, caractérisé en ce que l'unité électronique de mesure est réalisée sous la forme d'une unité de mesure et d'exploitation (E) qui contient un préamplificateur (respectivement 13 et 14) connecté au capteur d'efforts (5) et sur les sorties duquel sont connectés, en parallèle l'un à l'autre, un amplificateur-intégrateur à courant continu (16) et un amplificateur à courant alternatif (17), tandis qu'un amplificateur additif (18), un diviseur (19) et un voltmètre à affichage numérique sont branchés en série avec l'amplificateur-intégrateur à courant continu (16) et un redresseur de pointes (21) et un amplificateur additif (22) sont branchés en série avec l'amplificateur à courant alternatif (17), alors que par ailleurs la sortie du redresseur de pointes (21) est reliée à un amplificateur d'échantillonnage/maintien (23) dont la sortie est connectée à la deuxième entrée de l'amplificateur additif (18), tandis que l'autre entrée ou sortie du redresseur de pointes (21) est reliée à une unité (24) de déclenchement, commande et sélection de côté automatiques dont une sortie est connectée à un interrupteur de démarrage et l'autre sortie à un générateur d'impulsions d'échantillonnage (26) dont la sortie est appliquée sur une autre entrée de l'amplificateur d'échantillonnage/maintien (23), tandis que la sortie de l'amplificateur additif (22) est connectée à l'autre entrée du diviseur (19) et son autre entrée à la sortie de l'amplificateur-intégrateur à courant continu (16), et qu'une sortie du voltmètre à affichage numérique (20) est connectée à un afficheur numérique (27) et/ou à une unité d'adaptation BCD (28).

Fig.1

Fig. 2

Fig. 3